# EUROPÄISCHE PATENTSCHRIFT

(11) **EP 0 371 268 B1**
(45) Veröffentlichungstag und Bekanntmachung des Hinweises auf die Patenterteilung: **10.02.1993**
(21) Anmeldenummer: 89120023.0
(22) Anmeldetag: 27.10.1989
(51) Int. Cl.: F24D 3/14

(54) **Flächenelement für einen beheizbaren Hohlraumboden**
Panel for a thermal hollow floor
Panneaux pour plancher creux chauffé

(30) Priorität: 04.11.1988 DE 3837562
(43) Veröffentlichungstag der Anmeldung: 06.06.1990
(73) Patentinhaber: EHT SIEGMUND GMBH, D-53604 Bad Honnef (DE)
(72) Erfinder: Siegmund, Helmut Dieter, D-5340 Bad Honnef 6 (DE)
(74) Vertreter: Schaumburg, Thoenes & Thurn

(56) Entgegenhaltungen:
- EP-A- 0 226 736
- DE-A- 2 650 160
- DE-A- 3 321 046
- DE-B- 2 644 711

## Beschreibung

Die Erfindung betrifft ein Bodenelement für einen beheizbaren Hohlraumboden, bei welchem Element eine Distanzplatte mit über deren Fläche verteilt angeordneten Distanzelementen auf einem Unterboden liegt und bei dem zwischen dem Oberboden und der Distanzplatte Heizelemente einer Flächenheizung angeordnet sind.

Bei einem aus der DE-A 32 17 498 bekannten Hohlraumboden der vorstehend genannten Art besteht die Distanzplatte aus zwei Kunststoffolien, zwischen denen Luftpolster bildende abgeschlossene Noppen als Distanzelemente angeordnet sind. Nach dem Verlegen dieser Distanzplatten auf dem Unterboden wird die so gebildete Fläche für das Verlegen der Fußbodenheizung so behandelt wie ein herkömmlicher Unterboden. Die genannten Distanzplatten haben den Nachteil, daß sie keine hohe Tragkraft besitzen. Bei Hindurchleiten warmer Luft durch die zwischen den Distanzelementen gebildeten Hohlräume und gleichzeitig hoher Belastung des Bodens besteht die Gefahr, daß sich die Wände der Luftpolster dehnen oder gar reißen und daß dann der Oberboden einsinkt. Dies gilt erst recht für das Verhalten bei einem Brand. Darüber hinaus erfordert das Erstellen eines derartigen beheizbaren Hohlraumbodens eine doppelte Verlegearbeit, da zunächst die Distanzplatten verlegt und anschließend die Fußbodenheizung installiert werden muß.

Aus der DE-B-26 44 711 ist ferner eine Fußboden-Montageplatte bekannt, die aus einer Kunststoffolie besteht und in der durch Tiefziehen Klemmnocken zur Halterung von Heizmittelschläuchen einer Fußbodenheizung ausgebildet sind. Die Klemmnocken dienen gleichzeitig zur Abstützung eines von Stahlplatten gebildeten, die Heizmittelschläuche abdeckenden Oberbodens und können zum Erhöhen ihrer Festigkeit mit Zement oder dergleichen ausgegossen sein.

Der Erfindung liegt die Aufgabe zugrunde, ein einfach zu verlegendes Bodenelement der eingangs genannten Art anzugeben, das eine hohe Tragkraft besitzt und auch bei starker Erhitzung den Oberboden nicht einsinken läßt.

Diese Aufgabe wird erfindungsgemäß dadurch gelöst, daß die Distanzplatte aus einer Kunstoffolie mit die Distanzelemente bildenden tiefgezogenen Höckern besteht, die durch keramische Stützkörper verstärkt sind, und daß die Kunststoffolie auf ihrer den Höckern abgewandten Flachseite mit einer Trägerplatte für die Heizelemente verbunden ist. Die keramischen Stützkörper können dabei als massive oder napfförmige Elemente in die von den Höckern gebildeten Vertiefungen eingesetzt oder auch als Hohlteile auf die Höcker aufgesetzt werden. Das Einsetzen der Stützkörper in die Vertiefungen hat den Vorteil, daß die Stützkörper durch die auf der Folie befestigte Trägerplatte in den Vertiefungen festgehalten und somit vormontiert werden können. In beiden Fällen bilden jedoch die Stützkörper die tragenden Elemente der Distanzplatte, wobei das keramische Material sowohl hohen Temeperaturen als auch einer hohen Druckbelastung standhält. Durch die Verbindung der Trägerplatte mit der Distanzplatte können beide in einem Arbeitsgang verlegt werden, so daß der Arbeitsaufwand gegenüber dem Verlegen einer herkömmlichen Fußbodenheizung nicht größer ist.

Aus herstellungstechnischen Gründen ist es zweckmäßig, wenn die Höcker und die Stützkörper jeweils die Form eines Kegelstumpfes haben.

Gemäß einer bevorzugten Ausführungsform ist die Trägerplatte von einer zweiten Kunsstoffolie gebildet, in der Klemmnocken zur Halterung der Heizelemente ausgeformt sind. Dabei können die beiden Kunststoffolien unmittelbar miteinander verschweißt oder verklebt sein. Es besteht aber auch die Möglichkeit, zwischen den beiden Kunststoffolien eine Wärmedämmschicht anzuordnen, wenn angestrebt ist, die Heizelemente gegen den Hohlraum hin zu isolieren, wie dies in der DE-A 32 17 498 beschrieben ist. Anstelle der zweiten Kunststoffolie kann jedoch auch eine mit einer Haltefolie kaschierte Wärmedämmplatte vorgesehen sein, auf der die Heizelemente, also beispielsweise Heizwasser führende Heizrohre mit Halteklammern befestigt sind.

Anstelle einer die Distanzelemente umfassenden Kunstoffolie und einer die Klemmnocken für die Heizelemente umfassenden Kunststoffolie kann auch eine einzige Kunstoffolie gemäß Anspruch 6 vorgesehen sein, in der nach der einen Seite hin die Distanzelemente in Form von Höckern und nach der anderen Seite die Klemmnocken durch Tiefziehen ausgeformt sind. Auch hier können die Distanzelemente wie bei der vorstehend beschriebenen Lösung durch keramische Stützkörper verstärkt sein. Anstelle einer Verstärkung durch keramische Stützkörper kann aber auf die die Klemmnocken aufweisende Seite der Kunsstoffolie nach dem Einklemmen der Heizrohre ein flüssiger Estrich aufgebracht werden, der die von den Höckern gebildeten Vertiefungen ausfüllt und nach dem Erhärten nicht nur die Heizrohre einschließt sondern auch die Distanzelemente bildet. Die Kunststoffolie braucht in diesem Falle nur so stark zu sein, daß sie einerseits als Form für das Gießen der Distanzelemente dienen kann und andererseits die Heizrohre festhalten kann, bis der Estrich erstarrt ist.

Die folgende Beschreibung erläutert in Verbindung mit der beigefügten Zeichnung die Erfindung anhand von Ausführungsbeispielen. Es zeigen:
Fig. 1 einen schematischen Querschnitt durch einen Hohlraumboden mit einem Bodenelement gemäß einer ersten Ausführungsform der Erfindung,
Fig. 2 eine perspektivische Teildarstellung eines Bodenelementes gemäß einer zweiten Ausführungsform der Erfindung,
Fig. 3 eine perspektivische Ansicht einer zur Herstellung der Distanzplatte verwendeten Kunstoffolie gemäß einer dritten Ausführungsform der Erfindung und
Fig. 4 einen der Figur 1 entsprechenden Schnitt durch einen Hohlraumboden unter Verwendung einer Kunststoffolie gemäß Figur 3.

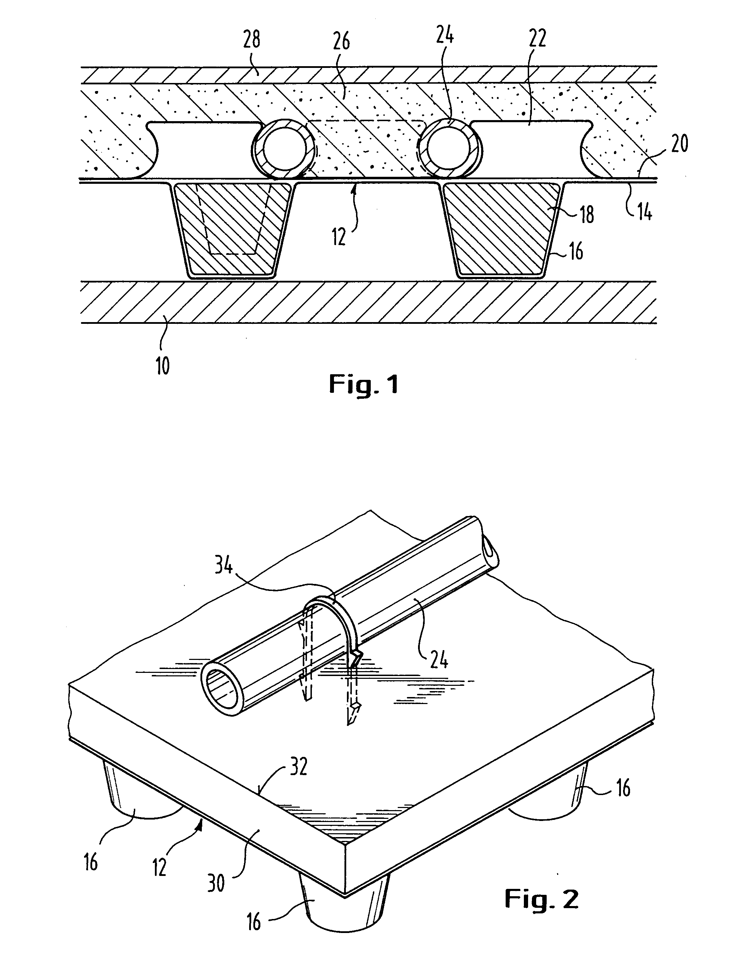

In der Figur 1 ist auf einem Unterboden 10 eine Distanzplatte 12 angeordnet, bestehend aus einer Kunststoffolie 14, in der durch Tiefziehen kegelstumpfförmige Höcker 16 ausgeformt sind, die in regelmäßigen Abständen über die gesamte Fläche der Distanzplatte 12 verteilt sind. In der von jedem Höcker 16 gebildeten Vertiefung ist ein an die Form des Höckers angepaßter keramischer Stützkörper 18 eingesetzt, der aus massivem Material oder auch als napfförmiger Hohlkörper hergestellt sein kann, wie dies in dem mittleren der drei Distanzelemente durch gestrichelte Linien angedeutet ist. Auf der Oberseite der Kunststoffolie 14 ist eine weitere Kunststoffolie 20 angeordnet, die mit der ersten Kunststoffolie 14 verschweißt, verklebt oder auf andere Weise verbunden ist. In der Kunststoffolie 20 sind durch Tiefziehen Klemmnocken 22 ausgeformt, zwischen denen die Heizrohre 24 einer Fußbodenheizung verlegt sind. Auf die Kunststoffolie 20 ist ein die Heizrohre 24 umschließender Estrich 26 aufgetragen, der durch einen Bodenbeleg 28 abgedeckt wird. Das aus der Distanzplatte 12 und der von der Kunststoffolie 20 gebildeten Trägerplatte bestehende Flächenelement kann als ganzes auf den Unterboden 10 aufgelegt und mit benachbarten Flächenelementen beispielsweise durch Druckknopfverschlüsse oder auf andere Weise verbunden werden.

Bei dem in Figur 2 dargestellten Ausführungsbeispiel ist die Distanzplatte 12 in der gleichen Weise ausgebildet, wie dies anhand der Figur 1 beschrieben wurde. Die auf der Distanzplatte 12 liegende Trägerplatte besteht aus einer Wärmedämmschicht 30, die beispielsweise aus Polyurethan-Hartschaum besteht und mit einer Haltefolie 32 kaschiert ist. Auf dieser Trägerplatte werden die Heizrohre 24 mit Hilfe von die Haltefolie 32 durchstechenden Klammern 34 festgelegt, wie dies an sich bekannt ist. Auch hier kann die Trägerplatte mit der Distanzplatte verklebt sein, so daß das so gebildete Flächenelement als ganzes verlegt werden kann.

Wie man erkennt, hat das so gebildete Flächenelement eine hohe Tragkraft, die auch im Falle eines Brandes nicht nachläßt. Mit dem beschriebenen Flächenelement kann ein beheizbarer Hohlraumboden aufgebaut werden, der je nach Ausbildung des Flächenelementes mit einer Isolierschicht zwischen der Trägerplatte und der Distanzplatte oder ohne eine Isolierschicht zwischen den beiden Platten unterschiedliche Möglichkeiten für eine Kombination einer Fußbodenheizung mit einer Belüftungs- oder Warmlufteinrichtung ermöglicht.

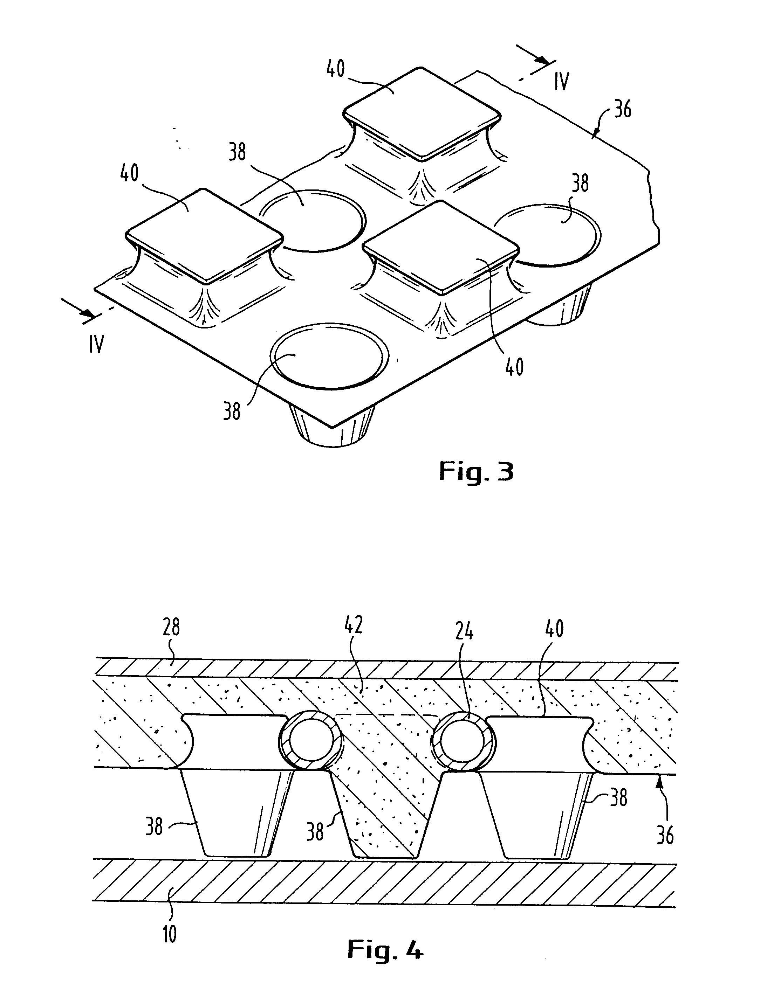

Während bei der Ausführungsform gemäß Figur 1 zwei Kunststoffolien 14 und 20 zur Halterung der keramischen Stützkörper bzw. zur Halterung der Heizrohre verwendet wurden, ist bei der Ausführungsform gemäß Figur 3 nur eine einzige Kunststoffolie 36 vorgesehen, in der nach der einen Seite kegelstumpfförmige Vertiefungen oder Höcker 38 und nach der anderen Seite hin Klemmnocken 40 zur Halterung von Heizrohren durch Tiefziehen ausgeformt sind. Diese Folie kann nun in der gleichen Weise eingesetzt werden wie die beiden Folien gemäß Figur 1. D.h. es können auch in die Vertiefungen 38 keramische Stützkörper der anhand der Figur 1 beschriebenen Art eingesetzt werden. Bei der Lösung gemäß den Figuren 3 und 4 kann man sich jedoch auch das Einsetzen der keramischen Stützkörper sparen, da der die Heizrohre 24 einschließende Estrich 42 beim Auftragen auch in die Vertiefungen 38 eindringt und diese vollständig ausfüllt. Nach dem Erhärten bildet der Estrich dann die eigentlichen Distanzelemente, während die Höcker 38 der Folie 36 nur die Form zum Gießen der Distanzelemente bilden.

## Patentansprüche

1. Bodenelement für einen beheizbaren Hohlraumboden, bei welchem Element eine Distanzplatte (12) mit über deren Fläche verteilt angeordneten Distanzelementen (16, 18) auf einem Unterboden (10) liegt, wobei zwischen einem Oberboden (26, 28) und der Distanzplatte (12) Heizelemente (24) einer Flächenheizung angeordnet sind, dadurch gekennzeichnet, daß die Distanzplatte (12) aus einer Kunststoffolie (14) mit die Distanzelemente bildenden tiefgezogenen Höckern (16) besteht, die durch keramische Stützkörper (18) verstärkt sind, und daß die Kunststoffolie (14) auf ihrer den Höckern (16) abgewandten Flachseite mit einer Trägerplatte (20; 30, 32) für die Heizelemente (24) verbunden ist.

2. Bodenelement nach Anspruch 1, dadurch gekennzeichnet, daß die keramischen Stützkörper (18) in die von den Höckern (16) gebildeten Vertiefungen eingesetzt sind.

3. Bodenelement nach Anspruch 1, dadurch gekennzeichnet, daß die keramischen Stützkörper die Höcker (16) umgeben.

4. Bodenelement nach dem Anspruch 1, dadurch gekennzeichnet, daß die Trägerplatte von einer zweiten Kunststoffolie (20) gebildet ist, in der Klemmnocken (22) zur Halterung der Heizelemente (24) ausgeformt sind.

5. Bodenelement nach Anspruch 4, dadurch gekennzeichnet, daß die beiden Kunststoffolien (14, 20) miteinander verschweißt oder verklebt sind.

6. Bodenelement für einen beheizbaren Hohlraumboden, bei welchem Element eine Distanzplatte (12) mit übe deren Fläche verteilt angeordneten Distanzelementen (16, 18) auf einem Unterboden (10) liegt, wobei zwischen einem Oberboden (26, 28) und der Distanzplatte (12) Heizelemente (24) einer Flächenheizung angeordnet sind, dadurch **gekennzeichnet**, daß die Distanzplatte (12) aus einer Kunststoffolie (14) besteht, in der durch Tiefziehen zur einen Seite Klemmnocken zur Halterung der Heizelemente und zur anderen Seite Höcker ausgeformt sind, welche die Distanzelemente bilden.

7. Bodenelement nach Anspruch 6, dadurch gekennzeichnet, daß die tiefgezogenen Höcker von keramischen Stützkörpern verstärkt sind.

8. Bodenelement nach Anspruch 6, dadurch gekennzeichnet, daß auf die Distanzplatte ein die Distanzelemente ausfüllender und die Klemmnocken mit den Heizelementen einschließender Estrich aufgebracht ist.

## Claims

1. A floor element for a heatable cavity floor, in which element a spacer panel (12) having spacer elements (16, 18) distributed over its surface rests on a sub-floor (10), heating elements (24) of a surface heating system being disposed between an over-floor (26, 28) and the spacer panel (12), characterised in that the spacer panel (12) consists of a plastic sheet (14) having deep-drawn projections (16) which form the spacer elements and which are reinforced by ceramic support members (18), and in that the plastic sheet (14) is connected to a carrier panel (20; 30, 32) for the heater elements (24) on its flat side remote from the projections (16).

2. A floor element according to claim 1, characterised in that the ceramic support members (18) are inserted into the recesses formed by the projections (16).

3. A floor element according to claim 1, characterised in that the ceramic support members surround the projections (16).

4. A floor element according to claim 1, characterised in that the carrier panel is formed by a second plastic sheet (20) in which clamping lugs (22) are formed for mounting the heating elements 24).

5. A floor element according to claim 4, characterised in that the two plastic sheets (14, 20) are welded or stuck together.

6. A floor element for a heatable cavity floor, in which element a spacer panel (12) having spacer elements (16, 18) distributed over its surface rests on a sub-floor (10), heating elements (24) of a surface heating system being disposed between an over-floor (26, 28) and the spacer panel (12), characterised in that the spacer panel (12) consists of a plastic sheet (14) in which, by deep drawing, clamping lugs for mounting the heating elements are formed on one side and projections which form the spacer elements on the other side.

7. A floor element according to claim 6, characterised in that the deep-drawn projections are reinforced by ceramic support members.

8. A floor element according to claim 6, characterised in that a screed which fills out the spacer elements and which encloses the clamping lugs with the heating elements is applied to the spacer panel.

## Revendications

1. Elément de plancher pour un plancher creux chauffant, élément dans lequel une plaque-entretoise (12) ayant des éléments d'entretoisement (16, 18) répartis sur sa surface est posée sur un sous-plancher (10), cependant qu'entre un plancher supérieur (26, 28) et la plaque-entretoise (12), sont disposés des éléments chauffants (24) d'un moyen de chauffage plat, caractérisé en ce que la plaque-entretoise (12) est composée d'une feuille (14) de matière plastique avec des bossages emboutis (16) constituant les éléments d'entretoisement qui sont renforcés par des corps de soutien (18) en céramique, et en ce que la feuille (14) de matière plastique est réunie par sa face plate opposée aux bossages (16), à une plaque porteuse (20 ; 30, 32) portant les éléments chauffants (24).

2. Elément de plancher selon la revendication 1, caractérisé en ce que les corps de soutien (18) en céramique sont introduits dans les enfoncements constitués par les bossages (16).

3. Elément de plancher selon la revendication 1, caractérisé en ce que les corps de soutien en céramique entourent les bossages (16).

4. Elément de plancher selon la revendication 1, caractérisé en ce que la plaque porteuse est constituée par une seconde feuille (20) en matière plastique dans laquelle sont moulées des saillies de blocage (22) pour la tenue des éléments chauffants (24).

5. Elément de plancher selon la revendication 4, caractérisé en ce que les deux feuilles (14, 20) en matière plastique sont soudées ou collées l'une à l'autre.

6. Elément de plancher pour un plancher creux chauffant, élément dans lequel une plaque-entretoise (12) ayant des éléments d'entretoisement (16,18) répartis sur sa surface est posée sur un sous-plancher (10), cependant qu'entre un plancher supérieur (26, 28) et la plaque-entretoise (12), sont disposés des éléments chauffants (24) d'un moyen de chauffage plat, caractérisé en ce que la plaque-entretoise (12) est composée d'une feuille (14) en matière plastique dans laquelle sont formés par emboutissage, sur un côté des saillies de blocage pour la tenue des éléments chauffants et, sur l'autre côté, des bossages constituant les éléments d'entretoisement.

7. Elément de plancher selon la revendication 6, caractérisé en ce que les bossages emboutis sont renforcés par des corps de soutien en céramique.

8. Elément de plancher selon la revendication 6, caractérisé en ce que, sur la plaque-entretoise, est coulée une chape qui remplit les éléments d'entretoisement et enrobe les saillies de blocage avec les éléments chauffants.
